(19) Europäisches Patentamt
European Patent Office
Office européen des brevets

(11) **EP 3 196 867 A2**

(12) **EUROPEAN PATENT APPLICATION**
published in accordance with Art. 153(4) EPC

(43) Date of publication:
**26.07.2017 Bulletin 2017/30**

(21) Application number: **15841148.8**

(22) Date of filing: **10.09.2015**

(51) Int Cl.:
***G09G 3/20*** (2006.01)

(86) International application number:
**PCT/KR2015/009520**

(87) International publication number:
**WO 2016/043472 (24.03.2016 Gazette 2016/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.09.2014 CN 201410479637**
**07.09.2015 KR 20150126452**

(71) Applicant: **Samsung Electronics Co., Ltd.**
**Gyeonggi-do 16677 (KR)**

(72) Inventors:
• **JIAO, Shaohui**
**Beijing 100000 (CN)**
• **HU, Haining**
**Beijing 100000 (CN)**

(74) Representative: **Gulde & Partner**
**Patent- und Rechtsanwaltskanzlei mbB**
**Wallstraße 58/59**
**10179 Berlin (DE)**

(54) **DEVICE AND METHOD FOR DISPLAYING CONTENT**

(57) Disclosed are a content display method and an electronic device. The content display method includes reducing display brightness of some of a plurality of pixels constituting content based on pixel information of the plurality of pixels. The content display method includes displaying the content based on the reduced display brightness.

FIG. 1B

EP 3 196 867 A2

## Description

[Technical Field]

The present disclosure relates to a device and method for displaying content, and more particularly, to a content display device and method capable of saving power.

[Background Art]

Display devices have advanced from cathode ray tubes, which are the first-generation of display technology, to liquid crystal displays (LCDs), which are the second-generation of the display technology, to organic light-emitting diodes (OLEDs), which are the third-generation of the display technology.

General electronic devices including a display device like smartphones, portable phones, tablet computers, and e-book readers use most power for driving the display device. Therefore, it is required to reduce the power consumption of display devices so as to increase the portability of the electronic devices. That is, the power consumed by a display device is inversely proportional to a battery operating time of an electronic device.

Particularly, since battery technology has slowly advanced and a screen size has been gradually enlarged, reducing power consumed by display devices is an important issue for the manufacturers of electronic devices.

If the power consumption of electronic devices is reduced and thus a battery operating time of the electronic devices increases, a user that carries an electronic device may use the electronic device for a longer time.

As a result of research on power consumption of electronic devices, it has been found that the power consumption of a display device equipped in an electronic device is 38% to 50% of the power consumption of the electronic device (F. Shearer, Power Management in Mobile Devices, Newnes, 2007). Therefore, the power consumption of electronic devices can be effectively reduced by decreasing the power consumption of a display device mounted on such electronic devices.

As one method of decreasing the power consumption of a display device mounted on such electronic devices, a method of reducing the overall brightness of a display device. However, if the brightness of a display device is overall reduced, the visibility of content displayed by the display device is also reduced, thereby causing inconvenience to a user.

Therefore, it is required to develop a technology for reducing the power consumption of display devices without decreasing the visibility of content displayed thereon.

[Disclosure]

[Technical Problem]

Provided are a device and method capable of reducing power consumption of a display device.

Provided are a device and method capable of reducing power consumption of a display device without decreasing the visibility of content displayed on the display device.

Provided are a device and method capable of enhancing the visibility of content displayed on a display device and reducing power consumption of the display device.

[Technical Solution]

According to an exemplary embodiment, an electronic device includes a controller configured to reduce display brightness of some of a plurality of pixels constituting content, based on pixel information of the plurality of pixels; and a display that displays the content, based on the reduced display brightness.

[Advantageous Effects]

According to an exemplary embodiment, power consumption of a display device may be reduced.

According to an exemplary embodiment, power consumption of a display device without decreasing the visibility of content displayed on the display device may be reduced.

According to an exemplary embodiment, the visibility of content displayed on a display device and reducing power consumption of the display device may be enhanced.

[Description of Drawings]

FIG. 1A illustrates an example of reducing display brightness of an electronic device according to an example embodiment;

FIG. 1B illustrates another example of reducing display brightness of an electronic device according to an example embodiment;

FIGS. 2 and 3 are diagrams of an electronic device according to an example embodiment;

FIG. 4 is a diagram for describing a method of reducing display brightness of content by using saliency information of pixels, according to an example embodiment;

FIG. 5A illustrates content with reduced display brightness, according to a related art method;

FIG. 5B illustrates content with reduced display brightness, according to an example embodiment;

FIG. 6A illustrates content with reduced display brightness is reduced, according to a related art method;

FIG. 6B illustrates content with reduced display brightness is reduced, according to an example embodiment;

FIG. 7A is a flowchart of a method of reducing display brightness of content in an electronic device, according to an example embodiment;

FIG. 7B is a flowchart of a method of reducing display brightness of content in an electronic device depending on a type of the content and other parameters, according to an example embodiment;

FIG. 8 is a diagram for describing a method of determining priorities of pieces of content depending on the types of the pieces of content, according to an example embodiment;

FIG. 9 is a diagram for describing a method of determining priorities of pieces of content depending on an overlap relationship of the pieces of content, according to an example embodiment;

FIG. 10 is a diagram for describing a method of determining priorities of pieces of content depending on a focus position of a user, according to an example embodiment;

FIG. 11 illustrates an example of reducing display brightness depending on a type of the content and other parameters, according to an example embodiment;

FIG. 12A is a flowchart of a method of reducing display brightness of content depending on priorities of pieces of content, according to an example embodiment;

FIG. 12B is a flowchart of a method of reducing display brightness based on priorities of pieces of content and pixel information of pixels constituting each of the pieces of content, according to an example embodiment; and

FIGS. 13A to 13C illustrate examples of reducing display brightness based on priorities of pieces of content and pixel information of pixels constituting each of the pieces of content, according to an example embodiment.

[Best Mode]

According to an aspect of an exemplary embodiment, an electronic device includes a controller configured to reduce display brightness of some of a plurality of pixels constituting content, based on pixel information of the plurality of pixels; and a display that displays the content, based on the reduced display brightness.

The some pixels may include at least one pixel included in a first pixel group and at least one pixel included in a second pixel group, and display brightness of the first pixel group may be reduced more than display brightness of the second pixel group, based on pixel information of each of the first and second pixel groups.

The pixel information may include saliency information of the plurality of pixels, and a saliency value of the first pixel group may be lower than a saliency value of the second pixel group.

A type of the content may be image or video, and the saliency information of the plurality of pixels may be acquired by performing bilateral filtering on the plurality of pixels.

The bilateral filtering may be performed based on Equation below:

$$B(I)_p = \frac{1}{W_p} \sum_{q \in N(p)} G_{\sigma_s}(\| p - q \|) G_{\sigma_r}(| I_p - I_q |) I_q$$

where $B(I)_p$ denotes a gray value which is obtained by bilateral filtering on a pixel "p" among the plurality of pixels, $N(p)$ is a set of peripheral pixels of the pixel "p", a pixel "q" is one of the peripheral pixels, $W_p$ denotes a normalization weight

$$W_p = \sum_{q \in N(p)} G_{\sigma_s}(\| p - q \|) G_{\sigma_r}(| I_p - I_q |)$$

of the peripheral pixels and is expressed as " " when image energy of content is conserved through the bilateral filtering, $G_{\sigma_s}$ a Gaussian function where a standard deviation is $\sigma_s$ and an average value is 0, $G_{\sigma_r}$ denotes a Gaussian function where a standard deviation is $\sigma_r$ and an average value

is 0, $\|p\text{-}q\|$ denotes a Euclidean distance between the pixel "p" and the pixel "q", Ip denotes a gray value of the pixel *"p"*, Iq denotes a gray value of the pixel *"q"*, and $|I_p\text{-}I_q|$ denotes a difference between the gray value of the pixel *"p"* and the gray value of the pixel *"q"*.

The pixel information may include a correction gray value of each of the plurality of pixels, and the correction gray value of each of the plurality of pixels may be acquired based on at least one of saliency information of the plurality of pixels, a detail display level, residual power of the electronic device, and ambient light of the electronic device.

The correction gray value of each of the plurality of pixels may be acquired based on Equation below:

$$I^*(p) = Y(\alpha, \beta, p)\left[\alpha I(p) + (1 - \alpha)\tilde{I}(p)\right]$$

where $I^*(p)$ denotes a correction gray value of a pixel *"p"* among the plurality of pixels,

$Y(\alpha,\beta,p)$ denotes a parameter for the pixel *"p"* and is expressed as $Y(\alpha,\beta,p) = \beta[1_{[0,1)}(\alpha)S(p) + 1_{[0,1)}(\alpha - 1)]$,

$\alpha$ denotes a parameter for a detail display level and has a range of $0 \leq \alpha \leq 1$,

when $\alpha=1$, the detail display level is highest,

when $\alpha=0$, the detail display level is lowest,

$\beta$ denotes a parameter for a brightness level, which is determined based on residual power and ambient light, and has a range of $0 \leq \beta \leq 1$,

$1_{[0,1)}(\alpha)$ denotes an indication function,

when $\alpha$ is within a range of [0, 1), $1_{[0,1)}(\alpha)$ is 1,

when $\alpha$ is not within the range of [0, 1), $1_{[0,1)}(\alpha)$ is 0,

S(p) denotes a saliency of the pixel *"p"* or denotes a saliency map mapped to saliency,

$1_{[0,1)}(\alpha\text{-}1)$ denotes an indication function,

when $\alpha$-1 is within a range of [0, 1), $1_{[0,1)}(\alpha\text{-}1)$ is 1,

when $\alpha$-1 is not within the range of [0, 1), $1_{[0,1)}(\alpha\text{-}1)$ is 0,

I(p) denotes a gray value of the pixel *"p"*, and

$\tilde{I}(p)$ denotes a result value obtained by performing the bilateral filtering on the pixel *"p"*.

The content may include a text and a background of the text, and the some pixels may correspond to the background.

The pixel information may include saliency information of the plurality of pixels, and saliency values of the some pixels corresponding to the background may be less than a certain value.

The pixel information may include saliency information of pixels corresponding to the text.

The controller may be configured to reduce display brightness of the content based on a type of the content.

The type of the content may be identified based on at least one of an image analysis of the content and a transmission flow of the content.

The type of the content may be text, and the display brightness of the content may be reduced more than in a case where the type of the content is image.

The content may be first content, the display may display second content overlapping at least a portion of the first content, on the first content, and the controller may be configured to reduce display brightness of the first content more than display brightness of the second content that is displayed on the first content.

The content may be first content, the display may display second content, and the controller may be configured to reduce display brightness of the first content more than display brightness of the second content according to a focus position of a user acquired based on an eye-gaze of the user.

The content may be first content, and the display may display second content, and the controller may be configured to receive a touch input of a user, and reduce display brightness of the first content more than display brightness of the second content, based on a position of the received touch input.

According to another aspect of an exemplary embodiment, a display method includes: reducing display brightness of some of a plurality of pixels corresponding to content displayed by a display of an electronic device, based on pixel information of the plurality of pixels; and displaying, by the display, the content based on the reduced display brightness.

The some pixels may include at least one pixel included in a first pixel group and at least one pixel included in a second pixel group, the pixel information may include saliency information of the plurality of pixels, and display brightness of the first pixel group may be reduced more than display brightness of the second pixel group, based on pixel information of each of the first and second pixel groups.

The pixel information may include saliency information of the plurality of pixels, and a saliency value of the first pixel group is lower than a saliency value of the second pixel group.

The pixel information may include correction gray value of each of the plurality of pixels, and the correction gray value of each of the plurality of pixels may be acquired based on at least one of saliency information of the plurality of pixels, a detail display level, residual power of the electronic device, and ambient light of the electronic device.

The content may include a text and a background of the text, and the some pixels may correspond to the background.

According to another aspect of an exemplary embodiment, provided is non-transitory computer-readable storage medium storing a program for executing the display method in a computer.

[Mode for Invention]

Reference will now be made in detail to example embodiments, examples of which are illustrated in the accompanying drawings, wherein like reference numerals refer to like elements throughout. In this regard, the present example embodiments may have different forms and should not be construed as being limited to the descriptions set forth herein. Accordingly, the example embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

In the present disclosure, general terms that have been widely used nowadays are selected, if possible, in consideration of functions of the inventive concept, but non-general terms may be selected according to the intentions of technicians in the this art, precedents, or new technologies, etc. Also, some terms may be arbitrarily chosen by the present applicant. In this case, the meanings of these terms will be explained in corresponding parts of the present disclosure in detail. Thus, the terms used herein should be defined not based on the names thereof but based on the meanings thereof and the whole context of the inventive concept.

As used herein, the singular forms *'a', 'an'* and *'the'* are intended to include the plural forms as well, unless the context clearly indicates otherwise. It will be further understood that the terms 'comprise' and/or 'comprising,' when used in this specification, specify the presence of stated features, integers, steps, operations, elements, and/or components, but do not preclude the presence or addition of one or more other features, integers, steps, operations, elements, components, and/or groups thereof. In particular, the numbers mentioned in the present disclosure are merely examples provided to help understanding of the example embodiments set forth herein and thus the example embodiments are not limited thereto.

In the present disclosure, the term such as 'unit', 'module', etc. should be understood as a unit in which at least one function or operation is processed and may be embodied as hardware, software, or a combination of hardware and software.

It will be understood that, although the terms 'first', 'second', 'third', etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the inventive concept.

The terminology used in the present disclosure will now be briefly described before example embodiments are described in detail.

In the present disclosure, the term 'electronic device' should be understood to include smartphones, tablet computers, mobile phones, personal digital assistants (PDAs), media players, portable multimedia players (PMPs), e-book terminals, digital broadcasting terminals, electronic bulletin boards, personal computers (PCs), laptop computers, micro-servers, global positioning system (GPS) devices, navigation devices, kiosks, MP3 players, analog televisions (TVs), digital TVs, three-dimensional (3D) TV, smart TVs, light-emitting diode (LED) TVs, organic light-emitting diode (OLED) TVs, plasma TVs, monitors, curved TVs including screen having a fixed curvature, flexible TVs including screen having a fixed curvature, bended TVs including screen having a fixed curvature, curvature-variable TVs where a curvature of a current screen is adjustable according to a received user input, digital cameras, wearable devices and other mobile devices capable of being worn on a body of a user, non-mobile computing devices, and/or the like, but is not limited thereto.

In the present disclosure, the term 'wearable device' should be understood to include watches, bracelets, rings, glasses, and hair bands having a communication function and a data processing function but is not limited thereto.

Content described herein may be data that is created in an electronic form by an information processing system and transmitted, received, or stored, or may denote an object that is obtained by visualizing data with a display device. The content may include a text, an image, video, and a background. The content may be distributed or shared in the electronic form over a network or the like. The content may be created as web-based content and may be displayed through the Internet web browser or the like, or may be created as application-based content and may be displayed through an application. However, the content is not limited thereto. In other embodiments, the content may be manufactured and displayed in various forms.

In the present specification, for convenience of description, an electronic device is assumed as a smartphone.

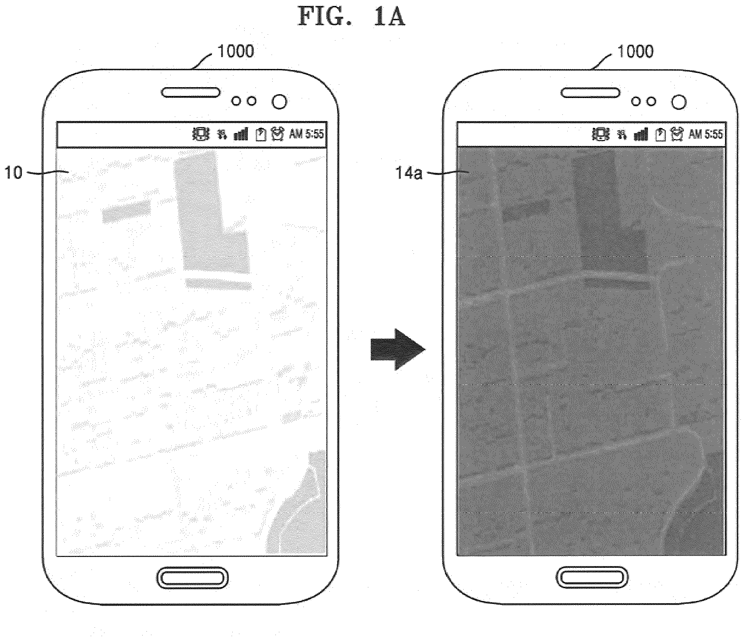

FIG. 1A illustrates an example of reducing display brightness of an electronic device according to an example embodiment.

An electronic device 1000 may display various pieces of content. For example, as illustrated in FIG. 1A, the electronic device 1000 may display a map image 10.

In order to reduce power consumption of the electronic device 1000, display brightness of the electronic device 1000 or display brightness of content displayed by the electronic device 1000 may be set to low brightness. Alternatively, display brightness of the electronic device 1000 or display brightness of content displayed by the electronic device 1000 may be adaptively reduced based on a user setting, a residual power amount of the electronic device 1000, the amount of external light, and/or the like.

For example, in order to reduce power consumption of the electronic device 1000, a user may use the electronic device 1000 in a power saving mode, and display brightness of pieces of content displayed in the power saving mode may be reduced more than that in a normal mode.

As illustrated in FIG. 1A, when display brightness is reduced in the electronic device 1000 according to a related art method, a display included in the electronic device 1000 may display a dimmed map image 14a.

Since display brightness of the dimmed map image 14a is wholly reduced, as illustrated in FIG. 14A, visibility is also reduced together.

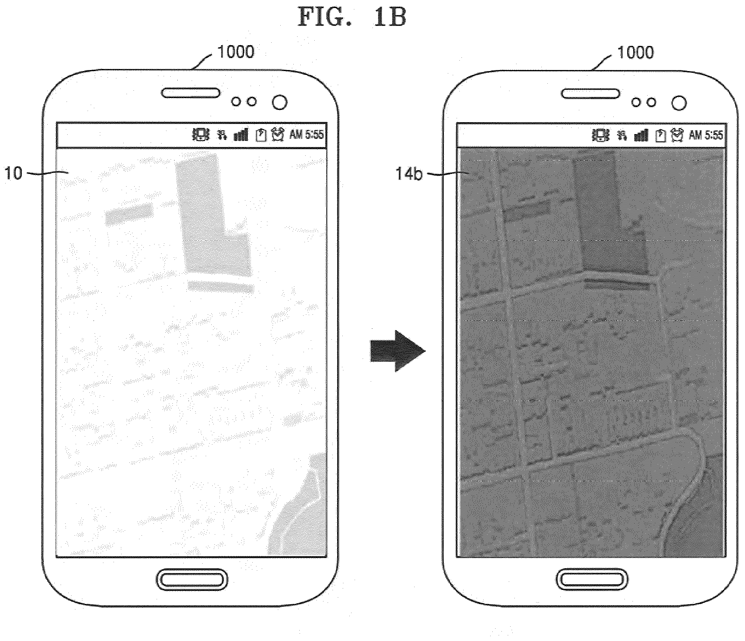

FIG. 1B illustrates another example of reducing display brightness of an electronic device according to an example embodiment.

As illustrated in FIG. 1B, when display brightness is reduced in the electronic device 1000 according to an example embodiment, the electronic device 1000 may display a dimmed map image 14b.

Since display brightness of the dimmed map image 14b is differently reduced depending on objects expressed in the dimmed map image 14b, as illustrated in FIG. 1B, visibility of the dimmed map image 14b is more enhanced than that of the dimmed map image 14a of FIG. 1A based on the related art method.

According to an example embodiment, power consumption of the electronic device 1000 is reduced, and visibility of content is enhanced despite of reduction of the display brightness.

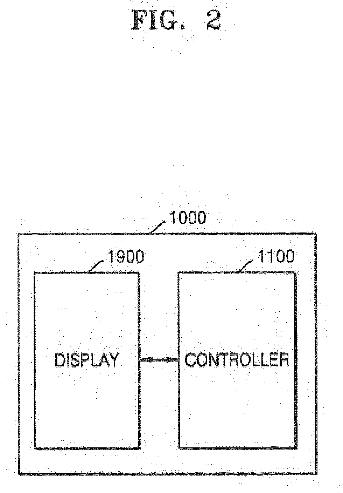

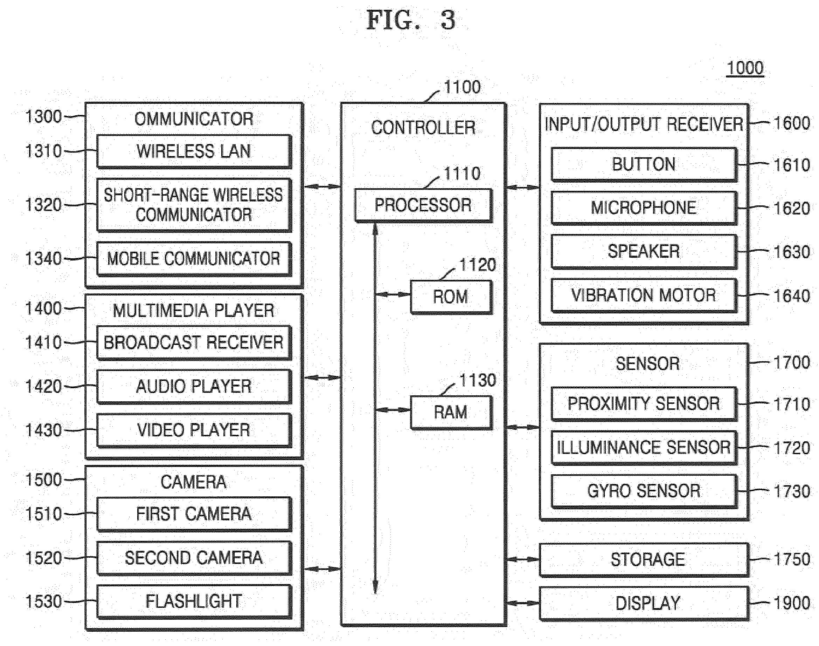

FIGS. 2 and 3 are diagrams of an electronic device according to an example embodiment.

The electronic device 1000 may reduce display brightness of content and may display the content based on the reduced display brightness.

The electronic device 1000 may reduce display brightness of some of a plurality of pixels constituting the content and may display the content based on the reduced display brightness.

Referring to FIG. 2, the electronic device 1000 may include a controller 1100 and a display 1900.

The controller 1100 may control an overall operation of the electronic device 1000.

The controller 1100 may reduce display brightness of some of a plurality of pixels constituting content and may display the content, based on pixel information of the pixels constituting the content. The pixel information may include an RGB value, a gray value, a saliency, a correction gray value, and/or the like of each of the pixels constituting the content.

For example, the controller 1100 may reduce display brightness of some of the pixels constituting the content, based on the gray value of each of the pixels constituting the content. In detail, the controller 1100 may reduce display brightness of a pixel having a gray value that is equal to or less than a predetermined value, or may reduce display brightness of a pixel having a gray value within a predetermined range.

In an example embodiment, the pixel information of the pixels may denote pixel information of a pixel group including a plurality of pixels. For example, content may be divided into a plurality of blocks, and a plurality of pixels included in one block may be grouped as one pixel group. The controller 1100 may further reduce display brightness of a plurality of pixels included in a first pixel group than display brightness of a plurality of pixels included in a second pixel group.

In an example embodiment, the pixel information of the pixels may be determined based on pixel information of a plurality of pixels included in a pixel group. For example, a gray value of a pixel group may be an average value of gray values of a plurality of pixels included in the pixel group, or may be determined as a gray value of one pixel included in the pixel group.

In an example embodiment, the controller 1100 may perform bilateral filtering on a plurality of pixels constituting content to acquire saliency information of the pixels and may reduce display brightness of some of the pixels, based on the acquired saliency information.

For example, the controller 1100 may reduce display brightness of pixels having saliency values which are lower than a predetermined value, or may reduce display brightness of pixels having no saliency information.

In an example embodiment, the controller 1100 may perform bilateral filtering on a pixel group to acquire saliency information of the pixel group and may reduce display brightness of a plurality of pixels included in the pixel group.

In an example embodiment, the controller 1100 may acquire a correction gray value of each of pixels, based on at least one of saliency information of the pixels, a detail display level, residual power of the electronic device 1000, and ambient light of the electronic device 1000. The controller 1100 may reduce display brightness of some of pixels constituting content, based on the acquired correction gray value.

For example, as a correction gray value of a pixel is lower, the controller 1100 may further reduce display brightness of the pixel, or as a correction gray value of a pixel is higher, the controller 1100 may reduce less display brightness of the pixel. The controller 1100 may reduce display brightness of a pixel having a correction gray value that is equal to or less than a predetermined value, or may reduce display brightness of a pixel having a gray value within a predetermined range.

Furthermore, the controller 1100 may further reduce display brightness of the plurality of pixels included in the first pixel group than display brightness of the plurality of pixels included in the second pixel group.

In an example embodiment, the controller 1100 may determine display brightness of content depending on a type of the content. For example, the controller 1100 may further reduce display brightness of the content in a case, where the type of the content is text, than in a case where the type of the content is image.

In an example embodiment, when the display 1900 displays pieces of content, the controller 1100 may determine priorities of the pieces of content depending on a content type and may determine display brightness of the pieces of content. For example, the controller 1100 may the most reduce display brightness of content, whose a content type is background, among the pieces of content and may the least reduce display brightness of content whose a content type is video.

In an example embodiment, the controller 1100 may identify a content type based on an image analysis of content or a transmission flow of the content.

In an example embodiment, the controller 1100 may determine display luminance of pieces of content depending on an overlap relationship between the pieces of content. For example, when first content is displayed and second content overlapping at least a portion of the first content is displayed on the first content, the controller 1100 may further reduce display brightness of the first content than that of the second content.

In an example embodiment, a camera 1500 may photograph a face of a user, and the controller 1100 may analyze a position corresponding to an eye-gaze of the user in the display 1900 by using a captured image to acquire a focus positon of the user. The controller 1100 may determine display brightness of pieces of content, based on the acquired focus position of the user. For example, when the display 1900 displays pieces of content, the controller 1900 may further reduce display brightness of content, which becomes farther away from the acquired focus position of the user, among the displayed pieces of content.

In an example embodiment, when the display 1900 is a touch screen that receives a touch input of a user, the controller 1100 may determine display brightness of pieces of content, based on a position of the received touch input. For example, when the display 1900 displays pieces of content, the controller 1900 may further reduce display brightness of content, which becomes farther away from a position of a received touch input, among the displayed pieces of content.

The display 1900 may display information obtained through processing by the controller 1900.

The display 1900 may display content.

The display 1900 may display content, based on display brightness reduced by the controller 1100.

The electronic device 1000 may include less elements than the number of the elements illustrated in FIG. 2, or may include more elements than the number of the elements illustrated in FIG. 2. For example, as illustrated in FIG. 3, the electronic device 1000 according to an example embodiment may further include a communicator 1300, a multimedia unit 1400, a camera 1500, an input/output unit 1600, a sensor 1700, and a storage unit 1750, in addition to the above-described controller 1100 and display 1900.

Hereinafter, the elements of the electronic device 1000 will be described in detail.

The controller 1100 may perform functions of the electronic device 1000 by controlling overall operations of the electronic device 1000. For example, the controller 1100 may execute programs stored in the storage unit 1750 to control the communicator 1300, the multimedia unit 1400, the camera 1500, the input/output unit 1600, the sensor 1700, the storage unit 1750, and the display 1900.

The controller 1900 may include a processor 1110. The controller 1100 may include read-only memory (ROM) 1120 that stores a control program for controlling the electronic device 1000. Also, the controller 1100 may store a signal or data inputted from the outside (for example, a server 300) of the electronic device 1000 or may include random access memory (RAM) 1130 that is used as a storage area for various operations performed by the electronic device 1000.

The processor 1110 may include a graphic processing unit (GPU, not shown) for graphic processing. The processor 1110 may be of a system-on chip (SoC) type that includes a core (not shown) and the GPU (not shown). The processor 1110 may include a single core, a dual core, a triple core, a quad core, or a core corresponding to a multiple thereof. Also, the processor 1110, the ROM 1120, and the RAM 1130 may be connected to each other through a bus.

The electronic device 1000 may communicate with an external device (for example, the server 300) through the communicator 1300.

The communicator 1300 may include at least one of a wireless LAN 1310, a short-range wireless communicator 1320, and a mobile communicator 1340. For example, the communicator 1300 may include one of the wireless LAN 1310, the short-range wireless communicator 1320, and the mobile communicator 1340, or may include a combination thereof.

The electronic device 1000 may be wirelessly connected to an access point (AP) through the wireless LAN 1310 at a place where the AP is installed. The wireless LAN 1310 may include, for example, Wi-Fi. The wireless LAN 1310 may support IEEE802.11x of IEEE. The short-range wireless communicator 1320 may wirelessly perform short-range communication with an external device according to control by the controller 1100 without the AP.

The short-range wireless communicator 1320 may include a Bluetooth communicator, a Bluetooth low-energy (BLE) communicator, a near-field communication (NFC) unit, a Wi-Fi communicator, a Zigbee communicator, an infrared data association (IrDA) communicator, a Wi-Fi Direct (WFD) communicator, a ultra wideband (UWB) communicator, an Ant+ communicator, and/or the like, but is not limited thereto.

The mobile communicator 1340 may transmit or receive a radio signal to or from at least one from among a base station, an external terminal, and the server 300 via a mobile communication network. The mobile communicator 1340 may transmit or receive the radio signal, which is used to perform voice call, video call, short message service (SMS), multimedia message (MMS), and data communication, to or from a mobile phone (not shown), a smartphone (not shown), a tablet PC (not shown), and/or the like having a contactable phone number. Here, the radio signal may include various types of data generated when a voice call signal, a video call signal, or a text/multimedia message is transmitted or received.

The multimedia unit 1400 may include a broadcast receiver 1410, an audio playing unit 1420, or a video playing unit 1430. The broadcast receiver 1410 may receive, through an antenna, a broadcasting signal (for example, a TV broadcasting signal, a radio broadcasting signal, or a data broadcasting signal) and additional broadcasting information (for example, electronic program guide (EPS) or electronic service guide (ESG)) transmitted from a broadcasting station according to control by the controller 1100. Also, the controller 1100 may play the received broadcasting signal and additional broadcasting information through the display 1900 by using a video codec (not shown) and an audio codec (not shown).

The audio playing unit 1420 may play, according to control by the controller 1100, an audio source (for example, an audio file having a file extension that is mp3, wma, ogg, or wav) stored in the storage unit 1750 of the electronic device 1000 or received from the outside by using the audio codec.

The audio playing unit 1420 may play, according to control by the controller 1100, an acoustic feedback (for example, an output of the audio source stored in the storage unit 1750, or the like), corresponding to an input received through the input/output unit 1600 by using the audio codec.

The video playing unit 1430 may play video data (for example, a video file having a file extension that is mpeg, mpg, mp4, avi, mov, or mkv) stored in the storage unit 1750 of the electronic device 1000 or received from the outside by using the video codec. An application executed in the electronic device 1000 may play audio data or video data by using the audio codec and/or the video codec. Also, a multimedia application executed in the electronic device 1000 may play the audio data and/or the video data by using a hardware codec (not shown) and/or a software codec (not shown).

It may be easily understood by one of ordinary skill in the art that various kinds of video codecs and audio codecs are produced and sold depending on the kind of an audio/video file.

A still image or a video may be photographed by the camera 1500. The camera 1500 may obtain an image frame of the still image or the video by using an image sensor (not shown). The image frame photographed by the image sensor (not shown) may be processed by the controller 1100 or a separate image processor (not shown). The processed image frame may be stored in the storage unit 1750 or may be transmitted to the outside through the communicator 1300.

In an example embodiment, the camera 1500 may photograph a face of a user, and the controller 1100 may analyze a position corresponding to an eye-gaze of the user in the display 1900 by using a captured image to acquire a focus positon of the user. The controller 1100 may determine display brightness of pieces of content, based on the acquired focus position of the user. For example, when the display 1900 displays pieces of content, the controller 1900 may further reduce display brightness of content, which becomes farther away from the acquired focus position of the user, among the displayed pieces of content.

The camera 1500 may include a first camera 1510 and a second camera 1520 which are located at different positions in the electronic device 1000. For example, the first camera 1510 may be located on a front surface of the electronic device 1000, and the second camera 1520 may be located on a rear surface of the electronic device 1000. For example, the first camera 1510 and the second camera 1520 may be located adjacent to each other on one surface of the electronic device 1000. For example, when the first camera 1510 and the second camera 1520 are located adjacent to each other on the one surface of the electronic device 1000, a 3D still image or a 3D video may be photographed by using the first camera 1510 and the second camera 1520. The camera 1500 may further include a number of cameras in addition to first camera 1510 and the second camera 1520.

The camera 1500 may include a flashlight 1530 that provides an amount of light necessary for photographing.

Also, the camera 1500 may further include an additional lens (not shown), which is detachably attached to a separate adaptor (not shown), for a wide angle photograph, telephoto photograph, and/or close-up photograph.

Data may be inputted to the electronic device 1000 through the input/output unit 1600, and data processed by the electronic device 1000 may be outputted through the input/output unit 1600.

The input/output unit 1600 may include at least one of a button 1610, a microphone 1620, a speaker 1630, and a vibration motor 1640, but is not limited thereto. In other example embodiments, the input/output unit 1600 may include various input/output devices.

The button 1610 may be located on a front surface, a rear surface, or a side surface of the electronic device 1000. For example, the button 1610 may be a home button, a menu button, a return button, and/or the like located on a lower portion of the front surface of the electronic device 1000. The button 1610 may be a lock button, a volume button, and/or the like located on the side surface of the electronic device 1000.

The button 1610 may be implemented as touch buttons located on a bezel on the exterior of a touch screen.

When the electronic device 1000 is a smartwatch, the button 1610 may be a crown of the smartwatch.

An electrical signal may be generated based on a sound signal which is inputted through the microphone 1620 from the outside. The electrical signal generated by the microphone 1620 may be converted by the audio codec to be stored in the storage unit 1750 or to be outputted through the speaker 1630. The microphone 1620 may be located at any position such as the front surface, the side surface, the rear surface, or the like of the electronic device 1000. The electronic device 1000 may include a plurality of microphones. Various noise removal algorithms for removing noise occurring while an external sound signal is being received may be used.

A sound corresponding to various signals (for example, a radio signal, a broadcasting signal, an audio source, a video file, photographing, and/or the like) received by the communicator 1300, the multimedia unit 1400, the camera 1500, the input/output unit 1600, or the sensor 1700 and an audio source or a video source stored in the storage unit 1750, may be outputted to the outside of the electronic device 1000 through the speaker 1630.

The speaker 1630 may output a sound (for example, a touch sound corresponding to a phone number input or a photographing button sound) corresponding to a function performed by the electronic device 1000. The speaker 1630 may be located at any position such as the front surface, the side surface, the rear surface, or the like of the electronic device 1000. The electronic device 1000 may include a plurality of speakers.

The vibration motor 1640 may convert an electrical signal into a mechanical vibration. The vibration motor 1640 may include a linear vibration motor, a bar type vibration motor, a coin type vibration motor, or a piezoelectric vibration motor. The vibration motor 1640 may generate a vibration corresponding to an output of an audio source or a video source. The vibration motor 1640 may generate a vibration corresponding to various signals received by the communicator 1300, the multimedia unit 1400, the camera 1500, the input/output unit 1600, or the sensor 1700.

The vibration motor 1640 may vibrate the whole electronic device 1000 or may vibrate a portion of the electronic device 1000. The electronic device 1000 may include a plurality of vibration motors.

The input/output unit 1600 may further include a touch pad (not shown), a connector (not shown), a keypad (not shown), a jog wheel (not shown), a jog switch (not shown), an input pen (not shown), and/or the like.

The touch pad (not shown) may be implemented in a capacitive type, a resistive type, an infrared sensing type, an acoustic wave conductive type, an integration tension measurement type, a piezo effect type, an electromagnetic resonance (EMR)) type, or the like. The touch pad (not shown) may configure a layer structure along with the display 1900, or may be directly located in the display 1900 itself, thereby implementing a touch screen.

In an example embodiment, when the display 1900 is a touch screen that receives a touch input of a user, the controller 1100 may determine display brightness of pieces of content, based on a position of the received touch input. For example, when the display 1900 displays pieces of content, the controller 1900 may further reduce display brightness of content, which becomes farther away from a position of a received touch input, among the displayed pieces of content.

The touch pad (not shown) may detect a proximity touch as well as a real touch. In the present specification, for convenience of a description, both of the real touch and the proximity touch may be referred to as a touch.

The real touch denotes an input that is made when a pointer physically touches the touch pad (not shown), and the proximity touch denotes an input that is made when the pointer does not physically touch the screen but approaches a position separated from the screen by a certain distance.

The pointer denotes a touch instrument for real touch or proximity-touch on the touch pad (not shown). Examples of the pointer include a stylus pen, a finger, etc.

The electronic device 1000 may further include a tactile sensor (not shown) or a force touch sensor (not shown) which is located inside or near the touch pad (not shown), for more precisely sensing a touch inputted. Various pieces of information such as a roughness of a touched surface, a stiffness of a touched object, a temperature of a touched point, etc. may be sensed by using the tactile sensor (not shown).

The pressure of touch input touched on the touch pad (not shown) may be sensed through the force touch sensor (not shown). According to the pressure of touch input, different functions may be performed in the electronic device 1000 so that a variety of gesture inputs may be embodied.

A gesture input may be implemented in various types. For example, a tap may be applied when a pointer touches the touch pad (not shown) once and then separates from the touch pan (not shown), a double tap may be applied by touching the touch pad (not shown) twice within a certain time, and a multiple tap may be applied by touching the touch pad (not shown) three times or more within a certain time. A long tap may be applied by maintaining the pointer touched on the touch pad (not shown) for a certain time or more or until a certain event occurs.

A drag may be applied when a pointer moves from one position from another position of the touch pad (not shown) while maintaining the pointer touched on the touch pad (not shown). A swipe may denote an input whose a moving speed of a pointer is relatively faster than a drag.

Pinch-out may be applied by moving two fingers from an inner side to an outer side on the touch pad (not shown), and pinch-in may be applied by moving two fingers from an outer side to an inner side like pinching.

A connector (not shown) may be used as an interface for the electronic device 1000 and a power source (not shown) connected each other. The electronic device 1000 may, according to control by the controller 1100, transmit data stored in the storage unit 1750 to the outside or receive data from the outside through a cable connected to the connector (not shown). Power may be applied to the electronic device 1000 through the cable connected to the connector (not shown), and a battery of the electronic device 1000 may be charged with the power. Also, the electronic device 1000 may be connected to an external accessory (for example, a speaker (not shown), a keyboard dock (not shown), and/or the like) through the connector (not shown).

A key input may be received from a user through a keypad (not shown). Examples of the keypad (not shown) may include a virtual keypad (not shown) displayed on a touch screen (not shown), a physical keypad (not shown) which is connectable by wire or wirelessly, a physical keypad (not shown) that is located on the front surface of the electronic device 1000, and/or the like.

The sensor 1700 may include at least one sensor for detecting a state of the electronic device 1000. For example, the sensor 1700 may include a proximity sensor 1710 that detects whether an object approaches to the electronic device 1000, an illuminance sensor 1720 that detects the amount of ambient light, and a gyro sensor 1730 that measures an angular speed with respect to each of the X axis, the Y axis, and the Z axis to measure a changed angle, but is not limited thereto.

The sensor 1700 may further include a GPS (not shown) for detecting a position of the electronic device 1000. In an outdoor place, a position of the electronic device 1000 may be calculated by the GPS (not shown).

In an indoor place, a position of the electronic device 1000 may be calculated by a wireless AP (not shown). In an indoor place, a position of the electronic device 1000 may be calculated by a cell-ID method using an identifier (ID) of a wireless AP, an enhanced cell-ID method using the ID of the wireless AP and received signal strength (RSS), an angle of arrival (AoA) method using an angle at which a signal transmitted from an AP is received by the electronic device 1000, and/or the like. The position of the electronic device 1000 may be calculated by a wireless beacon (not shown).

The sensor 1700 may include a magnetic sensor (not shown) that detects azimuth by using an earth's magnetic field, an acceleration sensor (not shown) that measures an angular speed (an acceleration of gravity and an acceleration of a motion) with respect to each of the X axis, the Y axis, and the Z axis, a gravity sensor (not shown) that detects a direction where gravity acts, an RGB sensor (not shown) that measures a concentration of red, green, blue, and white (RGBW) of lights, a hall sensor (not shown) that senses a magnetic field, a magnetometer (not shown) that measures an intensity of a magnetic field, an infrared (IR) sensor (not shown) that senses a motion of a user's hands by using IR light, an altimeter that recognizes a gradient and measures atmospheric pressure to detect an elevation, a finger scan sensor (not shown), a heart rate sensor (not shown), a pressure sensor (not shown), ultraviolet (UV) sensor (not shown), a temperature humidity sensor (not shown), or a motion recognition sensor (not shown) that recognizes a movement of a position of an object.

The storage unit 1750 may store various types of data and control programs for controlling the electronic device 1000 according to control by the controller 1100. The storage unit 1750 may store a signal or data inputted/outputted and corresponded to controlling of the communicator 1300, the input/output unit 1600, and the display 1900. For example, the storage unit 1750 may store a graphic user interface (GUI) associated with control programs for controlling the electronic device 1000 and an application which is provided from a manufacturer or is downloaded from the outside, images for providing the GUI, user information, documents, databases, relevant data, and/or the like.

The storage unit 1750 may include a non-volatile memory, a volatile memory, a hard disk drive (HDD), a solid state drive (SSD), and/or the like. The storage unit 1750 may be referred to as a memory.

The display 1900 may include a plurality of pixels, and information processed by the electronic device 1000 may be displayed through the plurality of pixels. For example, an execution screen of an operating system (OS) driven by the electronic device 1000, an execution screen of an application driven by the OS, and/or the like may be displayed on the display 1900. The controller 1100 may control display of a GUI corresponding to various functions such as voice call, video call, data transmission, broadcasting reception, photographing, video view, application execution, and/or the like displayed through the display 1900.

The display 1900 may include at least one of a liquid crystal display, a thin-film transistor-liquid crystal display, an organic light-emitting display, a plasma display panel, a flexible display, a 3D display, an electrophoretic display, a vacuum fluorescent display, etc.

The electronic device 1000 may include a plurality of the displays 1900 depending on an implementation type thereof. In this case, the plurality of displays 1900 may be disposed to face each other by using a hinge.

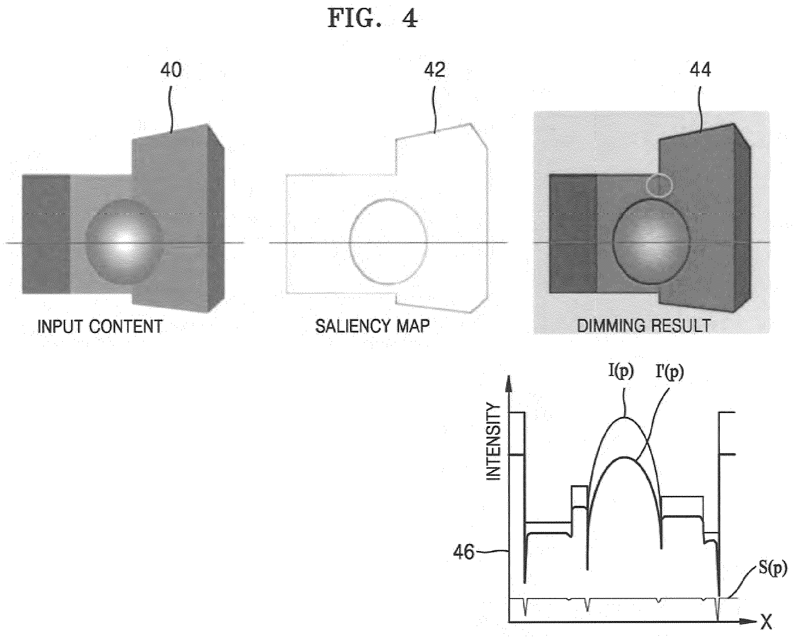

FIG. 4 is a diagram for describing a method of reducing display brightness of content by using saliency information of pixels, according to an example embodiment.

The electronic device 1000 may reduce display brightness of some of a plurality of pixels constituting content, based on pixel information of the pixels. Here, the pixel information may include saliency information of the pixels.

The saliency information of the pixels constituting the content may be used to identify a region of the content on which an eye-gaze of a person focuses. The saliency information of the pixels may be acquired by modeling a region, where a brightness difference, a color difference, or a gray value difference is larger than a peripheral region, or a point on which an eye-gaze of a person focuses because a clear contour line is clear.

When content is an image, the electronic device 1000 may perform the bilateral filtering on a plurality of pixels constituting the content to acquire gray values of the pixels and may use the acquired gray values as saliency information of the pixels. Here, the bilateral filtering may be performed based on the following Equation (1):

【Math Figure 1 】

$$B(I)_p = \frac{1}{W_p} \sum_{q \in N(p)} G_{\sigma_s}(\| p - q \|) G_{\sigma_r}(| I_p - I_q |) I_q$$

where B(I)$_p$ denotes a gray value which is obtained by bilateral filtering on a pixel *"p"* among the pixels, N(p) is a set of peripheral pixels of the pixel *"p"*, a pixel *"q"* is one of the peripheral pixels, $W_p$ denotes a normalization weight of the

$$W_p = \sum_{q \in N(p)} G_{\sigma_s}(\| p - q \|) G_{\sigma_r}(| I_p - I_q |)$$

peripheral pixels and is expressed as " " when image energy of content is conserved through the bilateral filtering, $G_{\sigma_s}$ a Gaussian function where a standard deviation is $\sigma_s$ and an average value is 0, $G_{\sigma_r}$ denotes a Gaussian function where a standard deviation is $\sigma_r$ and an average value is 0, $\|p-q\|$ denotes a Euclidean distance between the pixel *"p"* and the pixel *"q"*, Ip denotes a gray value of the pixel *"p"*, Iq denotes a gray value of the pixel *"q"*, and $|I_p-I_q|$ denotes a difference between the gray value of the pixel *"p"* and the gray value of the pixel *"q"*.

A result value of the bilateral filtering may be used as saliency information as-is, or an inversion of the result value may be used as the saliency information. Saliency information of a pixel may be acquired by a smoothing filtering algorithm (for example, Guided Filter proposed by Kaiming He, and Domain Transform Filter proposed by Eduardo S. L. Gastal) ensuring edge characteristic.

As illustrated in FIG. 4, saliency information of pixels constituting content 40 may be mapped to a saliency map 42. The saliency map 42 may be expressed as a gray scale. A pixel having a color closer to white in the saliency map 42 may be high in saliency, and a pixel having a color closer to black may be low in saliency. A mapping method for saliency information is not limited thereto. In other embodiments, the mapping method may be implemented as various methods.

The electronic device 1000 may determine display brightness of a pixel, based on a saliency value of the pixel. For example, referring to a graph 46 shown in FIG. 4, the electronic device 1000 may be further reduce display brightness of a pixel having a low saliency value than that of a pixel having a high saliency value.

In a method of displaying the content 40 according to an example embodiment, display brightness of a pixel having a low saliency value may be reduced more than that of pixel having high saliency, and thus, power of the electronic device 1000 is saved, and visibility of dimmed content 44 is enhanced.

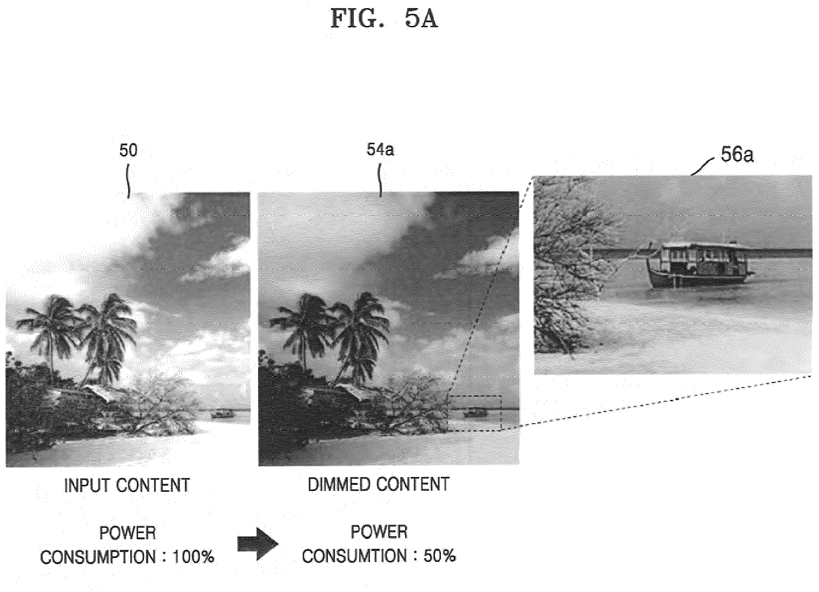

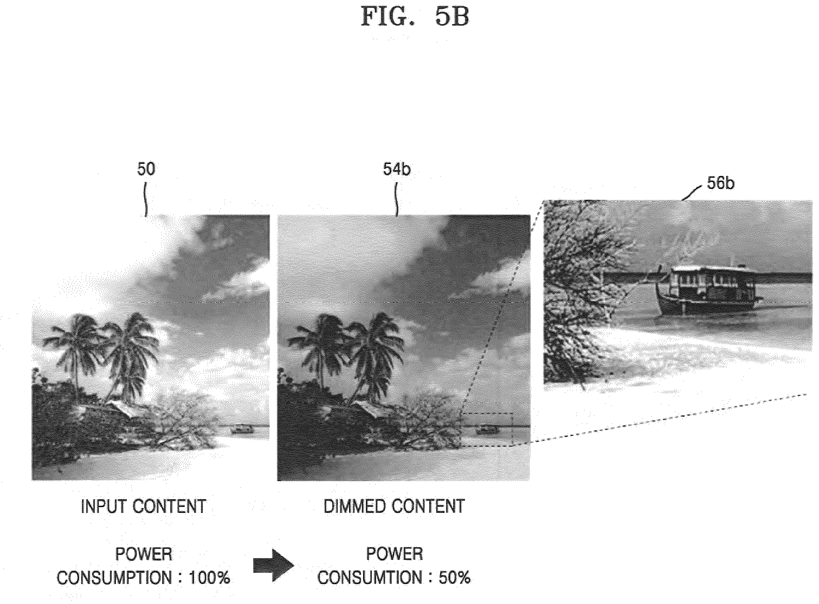

FIG. 5A illustrates content where display brightness is reduced, in a related art method. FIG. 5B illustrates content where display brightness is reduced, according to an example embodiment.

Input content 50, as illustrated in FIG. 5A, may be displayed. When display brightness of the content 50 is reduced according to the related art method, visibility of dimmed content 54a is also reduced together. In detail, in FIG. 5A, a shadow of a tree is not clear seen in an enlarged portion 56a of the dimmed content 54a.

On the other hand, when display brightness of the input content 50 is reduced by a content display method according to an example embodiment, visibility of the dimmed content 54b is not reduced to a reduction level caused by the related art method. In detail, in FIG. 5B, a shadow of a tree is clear seen in an enlarged portion 56b of the dimmed content 54b.

Furthermore, in the content display method according to an example embodiment, power consumption of the electronic device 1000 is saved.

Since display brightness of the dimmed map image 14a is reduced a whole region of the image 14a, as illustrated in FIG. 1A, visibility is also reduced together.

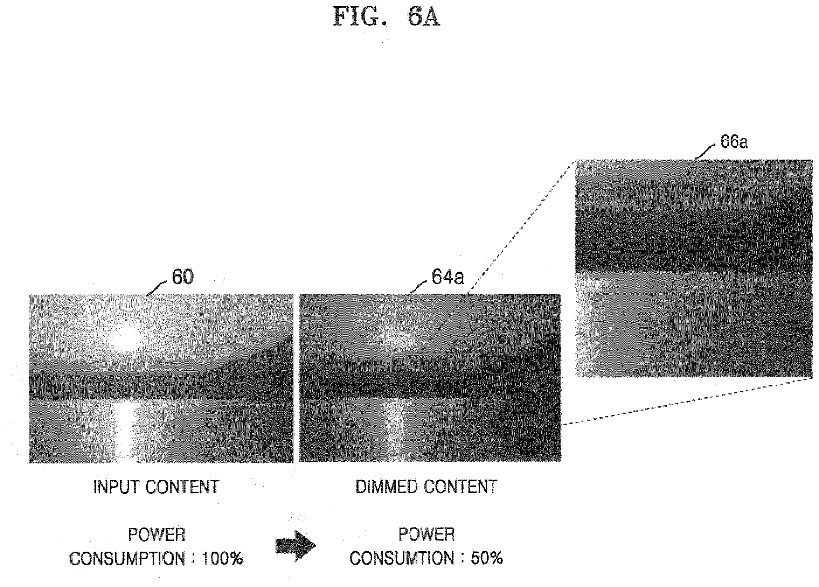

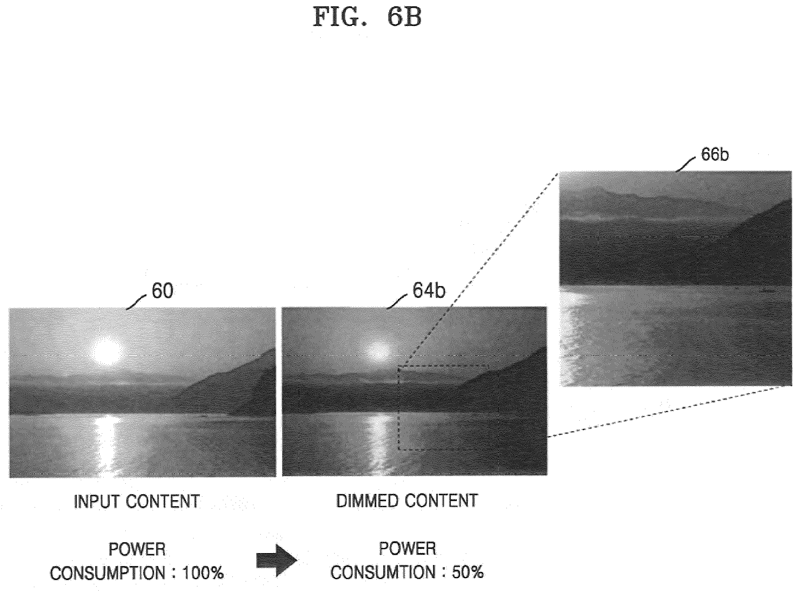

FIG. 6A illustrates content where display brightness is reduced, in a related art method. FIG. 6B illustrates content where display brightness is reduced, according to an example embodiment.

Input content 60, as illustrated in FIG. 6A, may be displayed. When display brightness of the content 60 is reduced according to the related art method, waves of a lake are not clear seen in an enlarged portion 66a of dimmed content 64a.

On the other hand, when display brightness of the input content 60 is reduced by a content display method according to an example embodiment, waves of a lake are clear seen in an enlarged portion 66b of dimmed content 64b.

The bilateral filtering may be used as a pre-filtering method. A processing time of the bilateral filtering may be about 3 ms. In a content display operation according to example embodiments, power consumption in an image processing operation may be about 8% to about 9% of total power consumption. In general smartphones, power consumption of a display screen may be about 38% to about 50% of total power consumption of a smartphone.

In a content display method according to example embodiments, power consumption of a display screen is reduced by 60% in comparison with current power consumption of the display screen, and thus, total power consumption of a smartphone is reduced to within 13% to 22% ([38%~50%]x60%-[8%~9%]=[13.8%~22%]). If total power consumption of a smartphone is reduced by 50%, FIGS. 5A and 6A respectively illustrate dimmed content 54a and dimmed content 64a obtained through dimming by a related art dimming method, and FIGS. 5B and 6B respectively illustrate dimmed content 54b and dimmed content 64b obtained through dimming by a content display method according to an example embodiment.

The dimmed content 54b and the dimmed content 64b obtained through dimming by the content display method according to an example embodiment are wholly brighter and clearer displayed than the dimmed content 54a and the dimmed content 64a obtained through dimming by the related art dimming method. That is, a better display effect is obtained when the same power is consumed.

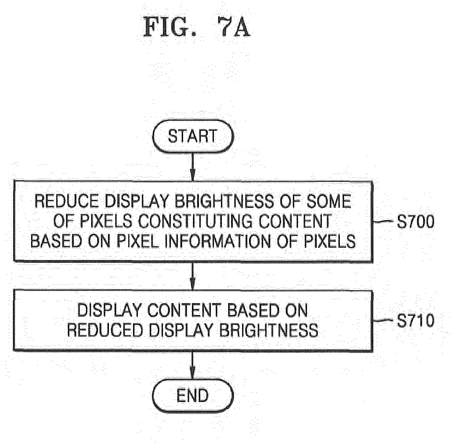

FIG. 7A is a flowchart of a method of reducing display brightness of content in the electronic device 1000, according to an example embodiment.

In operation S700, the electronic device 1000 may reduce display brightness of some of a plurality of pixels constituting content, based on pixel information of the pixels.

The pixel information may include an RGB value, a gray value, a saliency, a correction gray value, and/or the like of each of the pixels.

In an example embodiment, the electronic device 1000 may reduce display brightness of some of a plurality of pixels, based on saliency information of the plurality of pixels. The electronic device 1000 may further reduce display brightness of first pixels of the some pixels than those of second pixels of the some pixels.

In an example embodiment, the electronic device 1000 may reduce display brightness of pixels having saliency values which are lower than a predetermined value, or may reduce display brightness of pixels having no saliency information.

When a type of content is text, the content may include a background of the text. Generally, a user may have more interest in the text than the background of the text. Therefore, saliencies of pixels corresponding to the text may have a value which is higher than those of pixels corresponding to the background of the text. Alternatively, saliencies of the pixels corresponding to the background of the text may have a value "0" or the pixels corresponding to the background of the text may not have saliency information.

When saliencies of the pixels corresponding to the background of the text have a value *"0"* or the pixels corresponding to the background of the text do not have saliency information, the electronic device 1000 may reduce display brightness of the pixels corresponding to the background of the text. Alternatively, the electronic device 1000 may reduce display brightness of the pixels corresponding to the background of the text more than that of the pixels corresponding to the text. Since display brightness is determined by separately using text and a text background, power consumption of the electronic device 1000 is reduced, and visibility of the text is prevented from being reduced or is enhanced.

In text content, text may be extracted based on input information in an operation of transmitting the text content, or may be extracted by recognizing a region where the text content is displayed.

In operation S710, the electronic device 1000 may display content, based on display brightness which is reduced in operation S700.

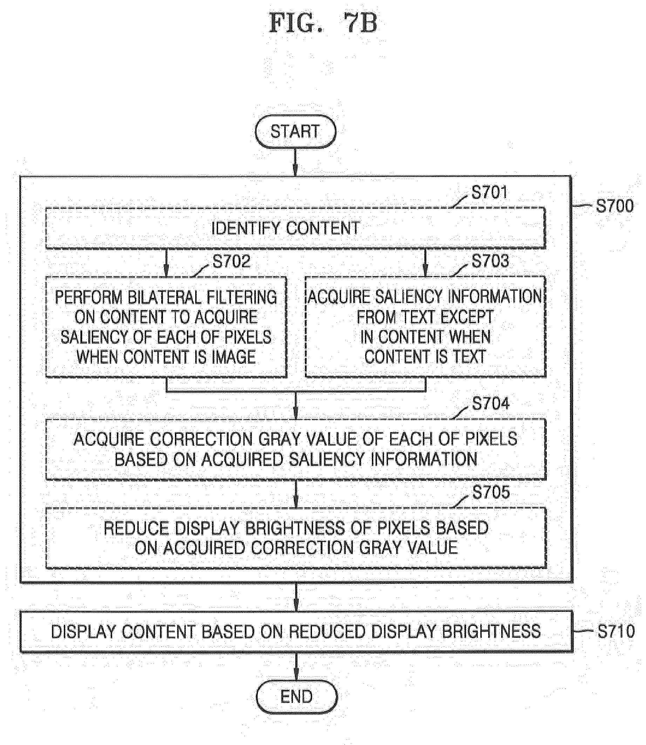

According to an example embodiment, a reduction rate of display brightness of content may be differently implemented based on a type of the content and other parameters. An example embodiment where a reduction rate of display brightness of content is differently implemented based on a type of the content and other parameters will be described with reference to FIG. 7B.

FIG. 7B is a flowchart of a method of reducing display brightness of content in an electronic device depending on a type of the content and other parameters, according to an example embodiment.

In operation S700, the electronic device 1000 may reduce display brightness of some of a plurality of pixels constituting content, based on pixel information of the pixels.

In detail, in operation S710, the electronic device 1000 may identify the content.

A content type may be identified based on an image analysis of content or a transmission flow of the content.

When content is transmitted to the display 1900 through a multi-flow division content transmission method, a content type may be directly identified from an input transmission flow. For example, multi-flow division content transmission technology may be MPEG media transport (MMT) standard.

When content is transmitted to the display 1900 through a single-flow transmission method, a content type may be directly identified by performing image analysis on the content.

Content may include pieces of sub-content. For example, complex content composed of an image and a text may include image content and text content. Sub-content may be treated as content, and the electronic device 1000 may reduce display brightness of some of a plurality of pixels constituting sub-content, based on pixel information of the pixels. Here, the pixel information may include saliency information of the pixels.

The complex content may include various pieces of sub-content such as a text, video, an image, and/or the like. The complex content may be transmitted according to the MMT standard, which may include an area division transmission method based on a content type. According to the MMT standard, content may be transmitted and encoded based on a content type thereof.

When the content type is an image as a result of the content identification in operation S700, the electronic device 1000 may perform the bilateral filtering on the content to acquire a saliency value of each of the pixels in operation S702. When the content type is a text, the electronic device 1000 may acquire saliency values from the text except a background in the content in operation S703.

In an example embodiment, when content is complex content including pieces of content, the electronic device 1000 may identify a type of each of pieces of sub-content included in the complex content. For example, when the content is complex content composed of an image and a text, the electronic device 1000 may perform bilateral filtering on image content to acquire a saliency value of each of a plurality of pixels constituting the image content and may acquire saliency values from a text except a background in text content.

When content is an image, the electronic device 1000 may perform the bilateral filtering on a plurality of pixels constituting the content to acquire gray values of the pixels and may use the acquired gray values as saliency information of the pixels. A result value of the bilateral filtering may be used as saliency information as-is, or an inversion of the result value may be used as the saliency information.

When content is a text, the electronic device 1000 may acquire saliency information of only pixels corresponding to the text. Here, there may be no saliency information of pixels corresponding to a background of the text. Alternatively, saliencies of the pixels corresponding to the text may have a value which is equal to or higher than a predetermined value, and saliencies of the pixels corresponding to the background of the text may have a value, which is equal to or less than the predetermined value, or a value *"0"*.

In operation S704, the electronic device 1000 may acquire a correction gray value of each of pixels, based on the acquired saliency information. The electronic device 1000 may acquire the correction gray value further based on a detail display level, residual power of the electronic device 1000, and ambient light of the electronic device 1000.

The correction gray value of each of pixels may be acquired based on the following Equation (2):

【Math Figure 2 】

$$I^*(p) = Y(\alpha, \beta, p)\left[\alpha I(p) + (1-\alpha)\check{I}(p)\right]$$

where I*(p) denotes a correction gray value of a pixel *"p"* among a plurality of pixels, $Y(\alpha,\beta,p)$ denotes a parameter for the pixel *"p"* and is expressed as $Y(\alpha,\beta,p) = \beta[1_{[0;1)}(\alpha)S(p) + 1_{[0,1)}(\alpha-1)]$, and $\alpha$ denotes a parameter for a detail display level and has a range of $0\leq\alpha\leq1$. When $\alpha=1$, the detail display level may be the highest, and when $\alpha=0$, the detail display level may be the lowest. $\beta$ denotes a parameter for a brightness level which is determined based on residual power and ambient light, and has a range of $0\leq\beta\leq1$, and $1_{[0,1)}(\alpha)$ denotes an indication function. When $\alpha$ is within a range of [0, 1), $1_{[0,1)}(\alpha)$ may be 1, and when $\alpha$ is not within the range of [0, 1), $1_{[0,1)}(\alpha)$ may be 0. S(p) denotes a saliency value of the pixel *"p"* or denotes a saliency map mapped to saliency. $1_{[0,1)}(\alpha-1)$ denotes an indication function. When $\alpha-1$ is within a range of [0, 1), $1_{[0,1)}(\alpha-1)$ may be 1, and when $\alpha-1$ is not within the range of [0,1), $1_{[0,1)}(\alpha-1)$ may be 0. I(p) denotes a gray value of the pixel "p", and $\tilde{l}(p)$ denotes a result value obtained by performing the bilateral filtering on the pixel "p".

The detail display level "$\alpha$" may be set by a user. For example, the electronic device 1000 may display, to the user, an original image and example images based on a detail display level of the original image. The user may select one image from among the displayed images, and thus, a detail display level corresponding to the selected image may be set.

When the detail display level "$\alpha$" is 1, namely, when details of content are all conserved, $Y(\alpha,\beta,p)$ and $I^*(p)$ may be determined based on a gray value "$I(p)$" of each of pixels and a result value "$\tilde{l}(p)$" obtained by performing the bilateral filtering on each of the pixels irrespective of saliencies of the pixels.

When the detail display level "$\alpha$" is not 1, namely, when only some of details of content are conserved, $Y(\alpha,\beta,p)$ and $I^*(p)$ may be determined based on a saliency value "S(p) of each of pixels, a gray value "$I(p)$" of each of the pixels, and a result value "$\tilde{l}(p)$" obtained by performing the bilateral filtering each of the pixels.

In operation S705, the electronic device 1000 may reduce display brightness of the pixels, based on the correction gray value which is acquired in operation S704.

In operation S710, the electronic device 1000 may display content, based on the display brightness which is reduced in operation S705.

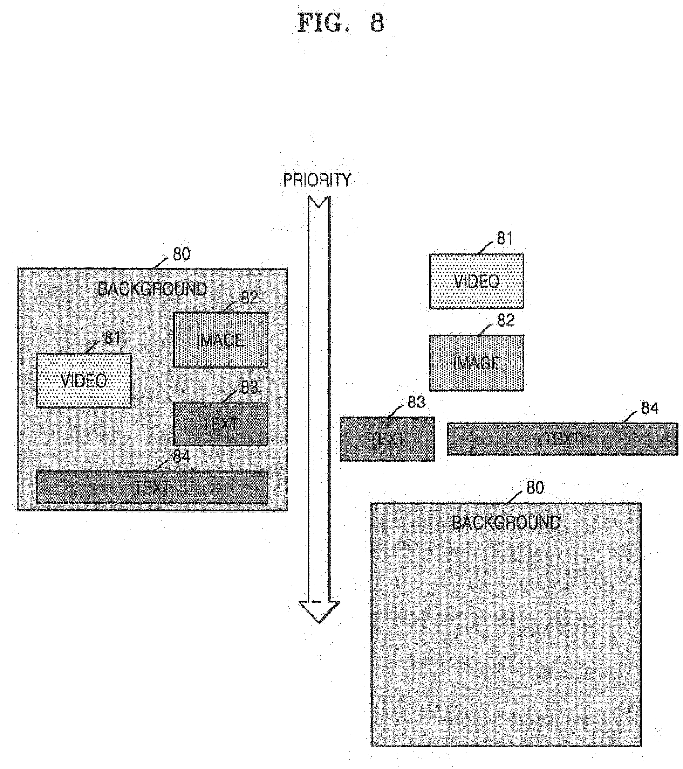

FIG. 8 is a diagram for describing a method of determining priorities of pieces of content depending on the content types of the pieces of content, according to an example embodiment.

Generally, a user may have more interest in video or image content than text content among pieces of content. Also, even when display brightness is identically reduced, visibility of video or image content is reduced more than text content. Therefore, the electronic device 1000 may reduce display brightness of content depending on a type of the content. For example, the electronic device 1000 may further reduce display brightness of content in a case, where a type of the content is a text, than a case where the type of the content is an image.

Referring to FIG. 8, pieces of content such as background content 80, video content 81, image content 82, and pieces of text content 83 and 84 may be displayed on a display screen of the electronic device 1000.

The electronic device 1000 may determine a priority, based on a content type and may further reduce display brightness of content having a low priority. For example, as illustrated in FIG. 8, the background content 80 may have the lowest priority, and the pieces of text content 83 and 84, the image content 82, and the video content 81 may have respective priorities in ascending order of priority. Based on priorities, the electronic device 1000 may the most reduce display brightness of the background content 80, may the second most reduce display brightness of the pieces of text content 83 and 84, may the third most reduce display brightness of the image content 82, and may the least reduce display brightness of the video content 81.

Priorities of pieces of content based on a content type may be expressed as type factors. For example, a type factor of the video content 81 may be expressed as T1, a type factor of the image content 82 may be expressed as T2, a type factor of each of the pieces of text content 83 and 84 may be expressed as T3, and a type factor of the background content 80 may be expressed as Tn. The type factors may have a relationship "T1>T2>T3>Tn", but is not limited thereto. For example, the type factor "Tn" of the background content 80 may be less than the type factor "T3" of each of the pieces of text content 83 and 84, and the type factor "T1" of the video content 81 may be the same as the type factor "T2" of the image content 82.

Identification of a content type, as described above, may be performed based on an image analysis of content or a transmission flow of the content.

In the content display method according to an example embodiment, a display brightness reduction rate may be adjusted based on a type of content. Power of the electronic device 1000 is effectively saved according to the characteristic of content, and visibility of content is more enhanced than a related art dimming method.

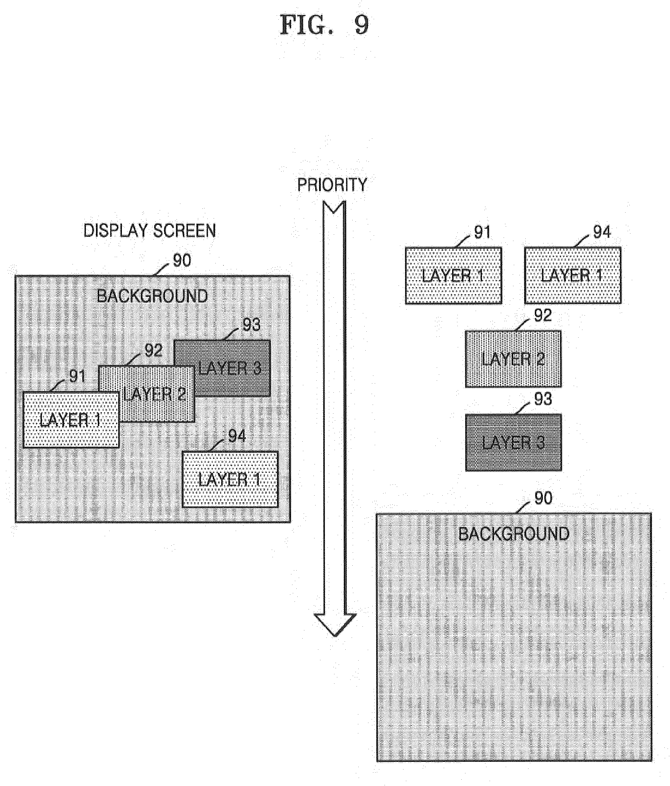

FIG. 9 is a diagram for describing a method of determining priorities of pieces of content depending on an overlap relationship of the pieces of content, according to an example embodiment.

Generally, a user may have more interest in content displayed on an uppermost layer (a layer factor) among pieces of content. For example, when first content may be displayed and then second content is displayed, the second content on the first content may generally cover at least a portion of the first content. That is, as content is activated later, the content may be displayed on a higher layer and may cover content displayed on a layer thereunder, and as content is displayed on a lower layer, a user may have less interest in the content. Therefore, the electronic device 1000 may determine display brightness of pieces of content, based on an overlap relationship between the pieces of content. For example, as content is displayed on a lower layer, display brightness of the content may be further reduced.

Referring to FIG. 9, background content may be displayed on a background layer 90 through a display screen of the electronic device 1000, and a plurality of layers 91 to 94 may be arranged on the background layer 90.

The electronic device 1000 may determine a priority of content depending on a layer on which the content is displayed, and as content becomes lower in priority, the electronic device 1000 may further reduce display brightness of the content. For example, as illustrated in FIG. 9, pieces of content located on uppermost layers 91 and 94 may have the highest priority, and background content displayed on the background layer 90 may have the lowest priority.

Priorities of pieces of content based on a layer on which content is displayed may be expressed as layer factors "L". For example, a layer factor of each of pieces of content located on the uppermost layers 91 and 94 may be expressed as L1, a layer factor of content located on a layer 92 just under the uppermost layers 91 and 94 may be expressed as L2, a layer factor of content located on a layer 93 just under the layer 92 may be expressed as L3, and a layer factor of the background content may be expressed as Ln corresponding to a lowermost layer. The layer factors may have a relationship "L1>L2>L3>Ln".

In the content display method according to an example embodiment, the display brightness reduction rate may be adjusted based on an overlap relationship between pieces of content. Therefore, display brightness of content covered by other content may be reduced more than content covering the other content. Accordingly, power of the electronic device 1000 is effectively saved, and visibility of content is more enhanced than the related art dimming method.

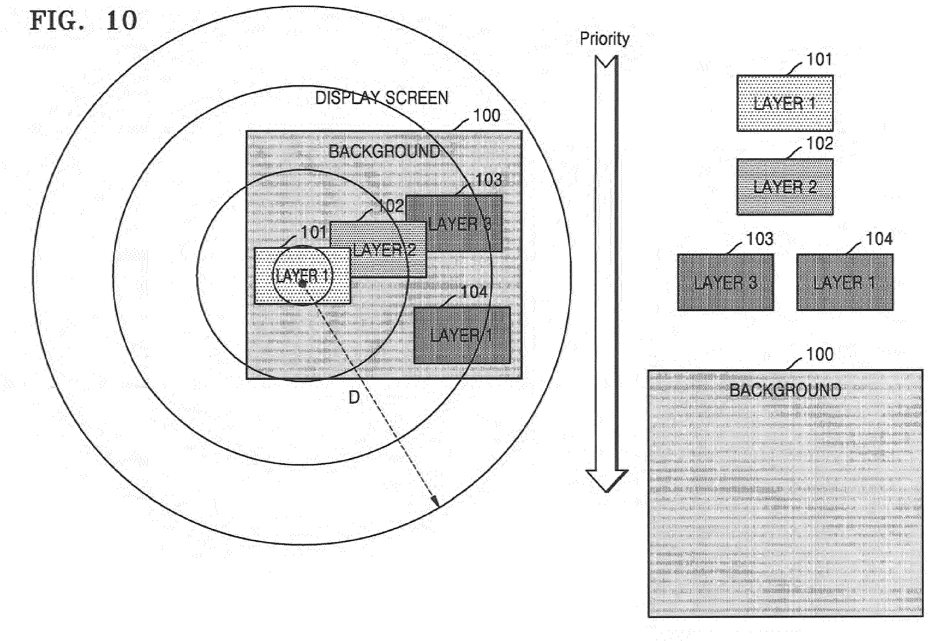

FIG. 10 is a diagram for describing a method of determining priorities of pieces of content depending on a focus position of a user, according to an example embodiment.

A user may have more interest in a position, which faces an eye-gaze of a user or receives a touch input of the user, than other positions in a display screen of the electronic device 1000. Therefore, the electronic device 1000 may adjust a display brightness reduction rate of each of pieces of content depending on a focus position of the user which is acquired based on an eye-gaze of the user or a touch input.

Referring to FIG. 10, background content 100 may be displayed on the display screen of the electronic device 1000, and various pieces of content 101 to 104 may be displayed on the background content 100.

The electronic device 1000 may further reduce display brightness of content, which is lower in priority, depending on a focus position of a user acquired based on an eye-gaze of the user. For example, as illustrated in FIG. 10, the content 101 closest to the focus position of the user which is acquired based on the eye-gaze of the user may have a highest priority, and as a distance D from content to the focus position of the user increases, the content may become lower in priority.

Priorities of pieces of content based on the focus position of the user may be expressed as focus factors. For example, a focus factor of the content 101 closest to the focus position of the user may be expressed as F1, a focus factor of the content 102 next closest to the focus position of the user after the content 101 may be expressed as F2, and a focus factor of each of the pieces of content 103 and 104 next closest to the focus position of the user after the content 102 may be expressed as F3. A focus factor of the background content 100 may be expressed as Fn in order for the background content 100 to have a lowest priority.

In the content display method according to an example embodiment, the display brightness reduction rate may be adjusted based on a position which faces an eye-gaze of a user or receives a touch input. Display brightness of content in which the user has actually less interest may be reduced more than that of content in which the user has actually more interest. Accordingly, power of the electronic device 1000 is effectively saved, and visibility of content is more enhanced than the related art dimming method.

Display brightness of content may be reduced based on at least one of the type factor, the layer factor, and the focus factor respectively described above with reference to FIGS. 8 to 10, and the content may be displayed based on the reduced display brightness.

When display brightness of content is reduced based on the type factor, the layer factor, and the focus factor, a display brightness reduction factor of nth content may be expressed as $reduction(L_n F_n T_n)$. Therefore, reduced display brightness "$Lum_{n\_result}$" of the nth content may be expressed as $Lum_{n\ result} = reduction(L_n\ F_n\ T_n) \times Lum_{n\ initial}$. Here, $Lum_{n\_initial}$ denotes before-reduction display brightness.

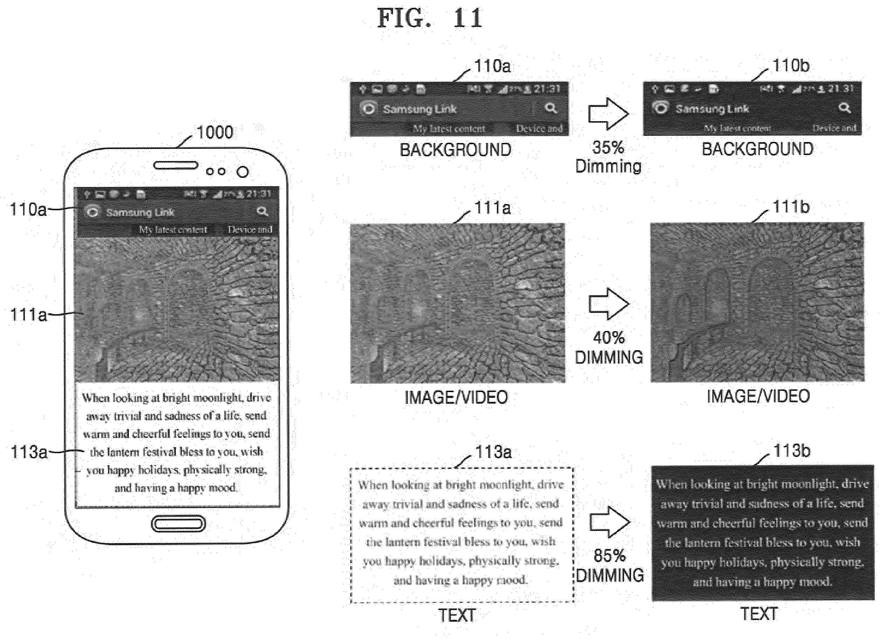

FIG. 11 illustrates an example of reducing display brightness depending on a type of the content and other parameters, according to an example embodiment.

The electronic device 1000 may display pieces of content 110a, 111 a and 113a such as background content 110a, image content 111 a, and text content 113a.

The electronic device 1000 may reduce display brightness of the pieces of content 110a, 111 a and 113a, based on content types of the pieces of content 110a, 111 a and 113a. For example, as illustrated in FIG. 11, the electronic device 1000 may reduce display brightness of the background content 110a by 35%, reduce display brightness of the image content 111 a by 40%, and reduce display brightness of the text content 113a by 80%.

Pieces of dimmed content 110b, 111 b and 113b whose display brightness has been reduced by the content display method according to an example embodiment may be further reduced in display brightness than the pieces of content 110a, 111 a and 113a whose display brightness is not yet reduced. Accordingly, power consumption of the electronic device 1000 is effectively saved, and visibility of content is enhanced.

A pixel corresponding to a text of the dimmed text content 113b may be displayed in white, and a pixel corresponding to a background of the text may be displayed in black.

Moreover, the pixel corresponding to the text of the dimmed text content 113b and the pixel corresponding to the background of the text may be displayed in violet.

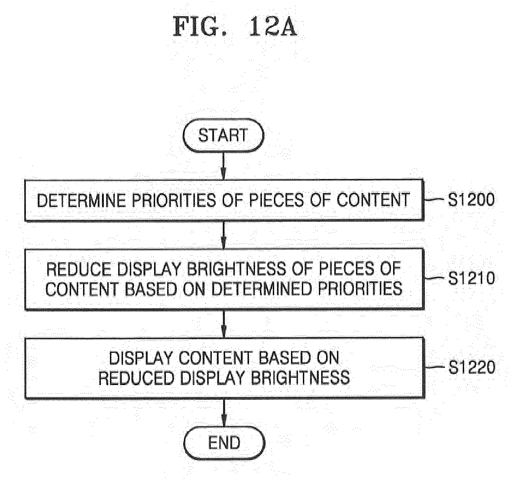

FIG. 12A is a flowchart of a method of reducing display brightness of content depending on priorities of pieces of content, according to an example embodiment.

In operation S1200, the electronic device 1000 may determine priorities of pieces of content.

The priorities of the pieces of content may be determined according to at least one of the methods described above with reference to FIGS. 8 to 10.

In operation S1210, the electronic device 1000 may reduce display brightness of the pieces of content, based on the priorities which are determined in operation S1200.

For example, as a priority of content becomes lower, the electronic device 1000 may further reduce display brightness of the content.

In operation S1220, the electronic device 1000 may display the pieces of content, based on the display brightness which is reduced in operation S1210.

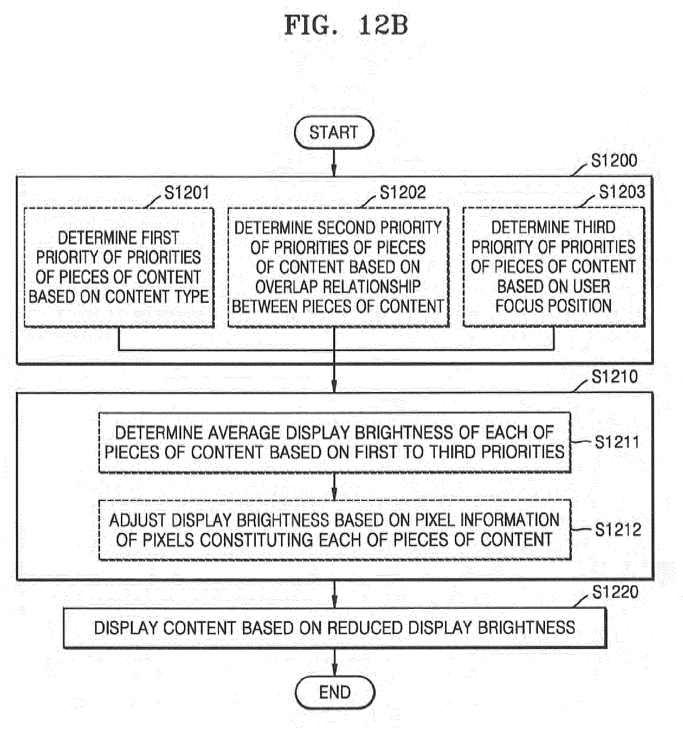

FIG. 12B is a flowchart of a method of reducing display brightness based on priorities of pieces of content and pixel information of pixels constituting each of the pieces of content, according to an example embodiment.

In operation S1200, the electronic device 1000 may determine priorities of pieces of content. In detail, in operation S1201, the electronic device 1000 may determine a first priority of the priorities of the pieces of content, based on a content type. In operation S1202, the electronic device 1000 may determine a second priority of the priorities of the pieces of content, based on an overlap relationship between the pieces of content. In operation S1203, the electronic device 1000 may determine a third priority of the priorities of the pieces of content, based on a user focus position. The first priority of the priorities of the pieces of content determined based on the content type may correspond to the type factor described above with reference to FIG. 8, the second priority of the priorities of the pieces of content determined based on the overlap relationship between the pieces of content may correspond to the layer factor described above with reference to FIG. 9, and the third priority of the priorities of the pieces of content determined based on the user focus position may correspond to the focus factor described above with reference to FIG. 10.

In operation S1210, the electronic device 1000 may reduce display brightness of the pieces of content, based on the priorities which are determined in operation S1200. In detail, in operation S1211, the electronic device 1000 may determine average display brightness of each of the pieces of content based on the first to third priorities.

For example, a type of content may be video, and when the content is closest to a user focus position among pieces of content and is displayed on an uppermost layer, average display brightness of the content may be determined as having a relatively higher value than that of other content. That is, display brightness of the content may be relatively less reduced than that of the other content.

In operation S1212, the electronic device 1000 may adjust display brightness, based on pixel information of a plurality of pixels constituting each of the pieces of content.

A method of adjusting display brightness of content based on pixel information of a plurality of pixels constituting the content is as described above with reference to FIGS. 4 to 7B.

In operation S1220, the electronic device 1000 may display the pieces of content, based on the reduced display brightness.

In the content display method according to an example embodiment, average display brightness may be first determined based on the characteristic of content displayed by the electronic device 1000, and display brightness of the content may be adjusted based on pixel information of a plurality of pixels constituting the content, thereby incrementally reducing display brightness. Accordingly, a power saving mode suitable for a user is provided.

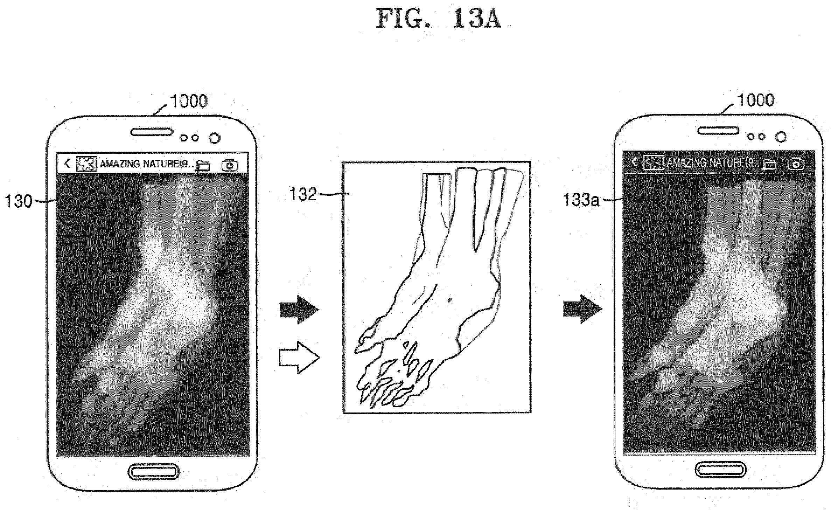

FIGS. 13A to 13C illustrate examples of reducing display brightness based on priorities of pieces of content and pixel information of pixels constituting each of the pieces of content, according to an example embodiment.

As illustrated in FIGS. 13A to 13C, the electronic device 1000 may display image content 130 and background content 131. The content 130 and 131 may be displayed by the above-described content display method according to an example embodiment.

The electronic device 1000 may determine average display brightness of content, based on a type of the content. For example, as illustrated in FIG. 13A, average display brightness of the background content 131 may be reduced more than that of the image content 130.

Furthermore, the electronic device 1000 may adjust display brightness of content, based on pixel information of a plurality of pixels constituting the content. For example, as illustrated in FIG. 13A, the electronic device 1000 may acquire a saliency map 132 for the image content 130 and may adjust display brightness of the image content 130, based on the saliency map 132.

Furthermore, the electronic device 1000 may reduce display brightness of the content 130 and 131, based on saliency information of the pixels constituting the content, a detail display level, residual power of the electronic device 1000, and ambient light of the electronic device 1000.

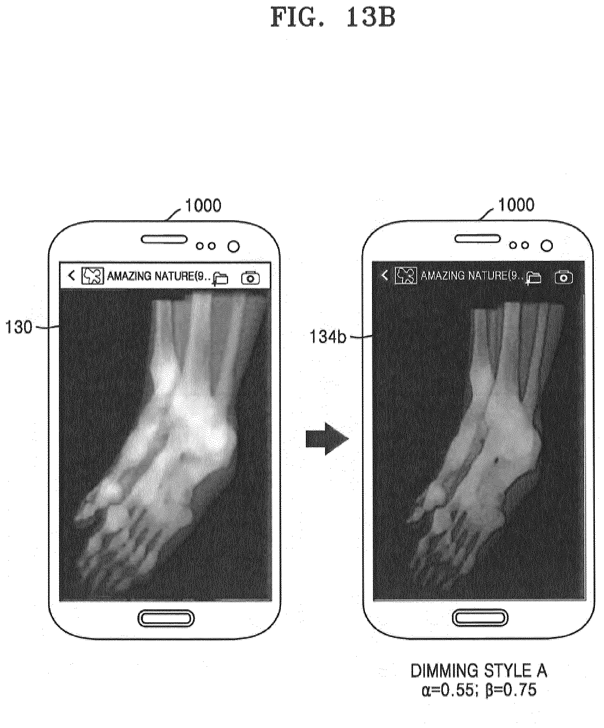

FIG. 13B illustrates pieces of dimmed content 134b and 135b when a parameter $"\alpha"$ for a detail display level is 0.55 and a parameter $"\beta"$ for a brightness level determined based on residual power and ambient light is 0.75.

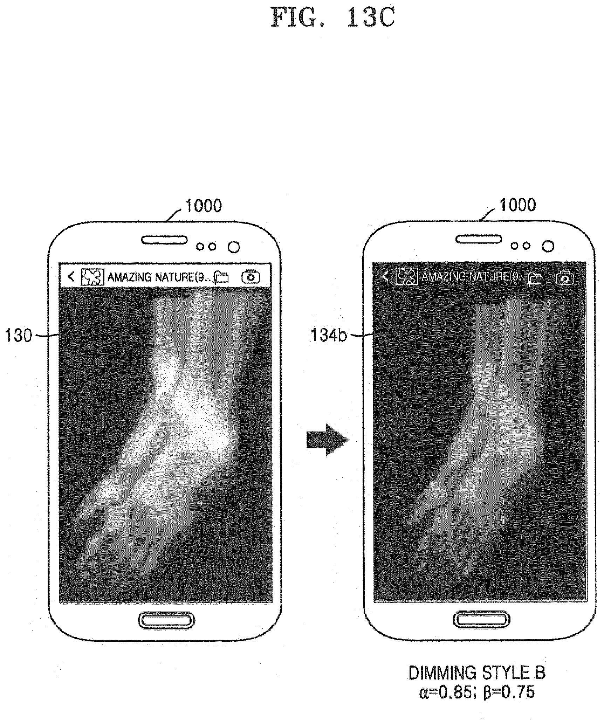

FIG. 13C illustrates the pieces of dimmed content 134b and 135b when the parameter $"\alpha"$ for the detail display level is 0.85 and the parameter $"\beta"$ for the brightness level determined based on the residual power and the ambient light is 0.75.

As illustrated in FIGS. 13B and 13C, the content display method according to an example embodiment may adjust a detail display level, and thus, power consumption of the electronic device 1000 is saved, and content is displayed in a style preferred by a user.

All references including publications, patent applications, and patents, cited herein, are hereby incorporated by reference to the same extent as if each reference were individually and specifically indicated to be incorporated by reference and were set forth in its entirety herein.

Embodiments may be implemented through non-transitory computer-readable recording media having recorded thereon computer-executable instructions such as program modules that are executed by a computer. The non-transitory computer-readable recording media may be any available media that can be accessed by a computer and include both volatile and nonvolatile media and both detachable and non-detachable media. Furthermore, the non-transitory computer-readable recording media may include computer storage media and communication media. The computer storage media include both volatile and nonvolatile and both detachable and non-detachable media implemented by any method or technique for storing information such as computer-readable instructions, data structures, program modules, or other data. The communication media typically embody computer-readable instructions, data structures, program modules, other data of a modulated data signal, or other transmission mechanism, and may include any information transmission media

Embodiments may be represented using functional block components and various operations. Such functional blocks may be realized by any number of hardware and/or software components configured to perform specified functions. For example, the inventive concept may employ various integrated circuit components, e.g., memory, processing elements, logic elements, look-up tables, and the like, which may carry out a variety of functions under control of at least one microprocessor or other control devices. As the elements of the inventive concept are implemented using software programming or software elements, the inventive concept may be implemented with any programming or scripting language such as C, C++, Java, assembler, or the like, including various algorithms that are any combination of data structures, processes, routines or other programming elements. Functional aspects may be realized as an algorithm executed by at least one processor. Furthermore, the inventive concept may employ conventional techniques for electronics configuration, signal processing and/or data processing. The terms 'mechanism', 'element', 'means', 'configuration', etc. are used broadly and are not limited to mechanical or physical embodiments. These terms should be understood as including software routines in conjunction with processors, etc.

The particular implementations shown and described herein are example embodiments and are not intended to otherwise limit the scope of the inventive concept in any way. For the sake of brevity, conventional electronics, control systems, software development and other functional aspects of the systems may not be described in detail. Furthermore, the lines or connecting elements shown in the appended drawings are intended to represent example functional relationships and/or physical or logical couplings between the various elements. It should be noted that many alternative or additional functional relationships, physical connections or logical connections may be present in a practical device. Moreover, no item or component is essential to the practice of the inventive concept unless it is specifically described as "essential" or "critical"

The use of the terms "a", "an", and "the" and similar referents in the context of describing the inventive concept (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the operations of all methods described herein can be performed in an appropriate order unless otherwise indicated herein or otherwise clearly contradicted by context. The inventive concept is not limited by an order in which the operations are described herein. The use of any and all examples, or example language (*e.g.,* "such as") provided herein, is intended merely to clearly describe the inventive concept and does not pose a limitation on the scope of the inventive concept unless otherwise claimed. Numerous modifications and adaptations will be readily apparent to those skilled in this art without departing from the spirit and scope of the inventive concept.

## Claims

1. An electronic device comprising:

   a controller configured to reduce display brightness of some of a plurality of pixels constituting content, based on pixel information of the plurality of pixels; and
   a display that displays the content, based on the reduced display brightness.

**2.** The electronic device of claim 1, wherein
the some pixels comprise at least one pixel included in a first pixel group and at least one pixel included in a second pixel group, and
display brightness of the first pixel group is reduced more than display brightness of the second pixel group, based on pixel information of each of the first and second pixel groups.

**3.** The electronic device of claim 2, wherein
the pixel information comprises saliency information of the plurality of pixels, and
a saliency value of the first pixel group is lower than a saliency value of the second pixel group.

**4.** The electronic device of claim 3, wherein
a type of the content is image or video, and
the saliency information of the plurality of pixels is acquired by performing bilateral filtering on the plurality of pixels.

**5.** The electronic device of claim 1, wherein
the pixel information comprises a correction gray value of each of the plurality of pixels, and
the correction gray value of each of the plurality of pixels is acquired based on at least one of saliency information of the plurality of pixels, a detail display level, residual power of the electronic device, and ambient light of the electronic device.

**6.** The electronic device of claim 1, wherein
the content comprises a text and a background of the text, and
the some pixels correspond to the background.

**7.** The electronic device of claim 6, wherein
the pixel information comprises saliency information of the plurality of pixels, and
saliency values of the some pixels corresponding to the background are less than a certain value.

**8.** The electronic device of claim 6, wherein
the pixel information comprises saliency information of pixels corresponding to the text.

**9.** The electronic device of claim 1, wherein the controller is configured to reduce display brightness of the content based on a type of the content.

**10.** The electronic device of claim 9, wherein the type of the content is identified based on at least one of an image analysis of the content and a transmission flow of the content.

**11.** The electronic device of claim 9, wherein
the type of the content is text, and
the display brightness of the content is reduced more than in a case where the type of the content is image.

**12.** The electronic device of claim 1, wherein
the content is first content,
the display displays second content overlapping at least a portion of the first content, on the first content, and
the controller is configured to reduce display brightness of the first content more than display brightness of the second content that is displayed on the first content.

**13.** The electronic device of claim 1, wherein
the content is first content,
the display displays second content, and
the controller is configured to reduce display brightness of the first content more than display brightness of the second content according to a focus position of a user acquired based on an eye-gaze of the user.

**14.** The electronic device of claim 1, wherein
the content is first content,
the display displays second content, and
the controller is configured to receive a touch input of a user, and reduce display brightness of the first content more than display brightness of the second content, based on a position of the received touch input.

**15.** A display method comprising:

reducing display brightness of some of a plurality of pixels corresponding to content displayed by a display of an electronic device, based on pixel information of the plurality of pixels; and

displaying, by the display, the content based on the reduced display brightness.

**16.** The display method of claim 15, wherein
the some pixels comprise at least one pixel included in a first pixel group and at least one pixel included in a second pixel group,
the pixel information comprises saliency information of the plurality of pixels, and
display brightness of the first pixel group is reduced more than display brightness of the second pixel group, based on pixel information of each of the first and second pixel groups.

**17.** The display method of claim 15, wherein
the pixel information comprises saliency information of the plurality of pixels, and a saliency value of the first pixel group is lower than a saliency value of the second pixel group.

**18.** The display method of claim 16, wherein
the pixel information comprises a correction gray value of each of the plurality of pixels, and
the correction gray value of each of the plurality of pixels is acquired based on at least one of saliency information of the plurality of pixels, a detail display level, residual power of the electronic device, and ambient light of the electronic device.

**19.** The display method of claim 15, wherein
the content comprises a text and a background of the text, and
the some pixels correspond to the background.

**20.** A non-transitory computer-readable storage medium storing a program for executing the display method of one of claims 15 to 19 in a computer.

# FIG. 1A

## FIG. 1B

EP 3 196 867 A2

FIG. 2

# FIG. 3

EP 3 196 867 A2

# FIG. 4

40

INPUT CONTENT

42

SALIENCY MAP

44

DIMMING RESULT

I(p) I'(p)

INTENSITY

46

S(p)

X

EP 3 196 867 A2

# FIG. 5A

50

54a

56a

INPUT CONTENT

DIMMED CONTENT

POWER
CONSUMPTION : 100%

➡

POWER
CONSUMTION : 50%

EP 3 196 867 A2

FIG. 5B

## FIG. 6A

POWER
CONSUMPTION : 100%

POWER
CONSUMTION : 50%

# FIG. 6B

60 — INPUT CONTENT

POWER CONSUMPTION : 100%

64b — DIMMED CONTENT

POWER CONSUMTION : 50%

66b

EP 3 196 867 A2

# FIG. 7A

```
START
  │
  ▼
┌─────────────────────────────────────┐
│ REDUCE DISPLAY BRIGHTNESS OF SOME   │
│ OF PIXELS CONSTITUTING CONTENT      │── S700
│ BASED ON PIXEL INFORMATION OF PIXELS│
└─────────────────────────────────────┘
  │
  ▼
┌─────────────────────────────────────┐
│ DISPLAY CONTENT BASED ON            │── S710
│ REDUCED DISPLAY BRIGHTNESS          │
└─────────────────────────────────────┘
  │
  ▼
 END
```

# FIG. 7B

START

S700

IDENTIFY CONTENT — S701

PERFORM BILATERAL FILTERING ON CONTENT TO ACQUIRE SALIENCY OF EACH OF PIXELS WHEN CONTENT IS IMAGE — S702

ACQUIRE SALIENCY INFORMATION FROM TEXT EXCEPT IN CONTENT WHEN CONTENT IS TEXT — S703

ACQUIRE CORRECTION GRAY VALUE OF EACH OF PIXELS BASED ON ACQUIRED SALIENCY INFORMATION — S704

REDUCE DISPLAY BRIGHTNESS OF PIXELS BASED ON ACQUIRED CORRECTION GRAY VALUE — S705

DISPLAY CONTENT BASED ON REDUCED DISPLAY BRIGHTNESS — S710

END

# FIG. 8

FIG. 9

PRIORITY

DISPLAY SCREEN

90

BACKGROUND

93

92

91

LAYER 3

LAYER 2

LAYER 1

94

LAYER 1

91

94

LAYER 1

LAYER 1

92

LAYER 2

93

LAYER 3

90

BACKGROUND

# FIG. 10

DISPLAY SCREEN

Priority

BACKGROUND 100

103 LAYER 3

102 LAYER 2

101 LAYER 1

104 LAYER 1

D

101 LAYER 1

102 LAYER 2

103 LAYER 3    104 LAYER 1

100 BACKGROUND

EP 3 196 867 A2

33

## FIG. 11

**1000**

110a
111a
113a

When looking at bright moonlight, drive away trivial and sadness of a life, send warm and cheerful feelings to you, send the lantern festival bless to you, wish you happy holidays, physically strong, and having a happy mood.

110a
Samsung Link
My latest content    Device and
BACKGROUND

→ 35% Dimming →

110b
Samsung Link
My latest content    Device and
BACKGROUND

111a
IMAGE/VIDEO

→ 40% DIMMING →

111b
IMAGE/VIDEO

113a
When looking at bright moonlight, drive away trivial and sadness of a life, send warm and cheerful feelings to you, send the lantern festival bless to you, wish you happy holidays, physically strong, and having a happy mood.
TEXT

→ 85% DIMMING →

113b
When looking at bright moonlight, drive away trivial and sadness of a life, send warm and cheerful feelings to you, send the lantern festival bless to you, wish you happy holidays, physically strong, and having a happy mood.
TEXT

# FIG. 12A

START

DETERMINE PRIORITIES OF PIECES OF CONTENT —S1200

REDUCE DISPLAY BRIGHTNESS OF PIECES OF CONTENT BASED ON DETERMINED PRIORITIES —S1210

DISPLAY CONTENT BASED ON REDUCED DISPLAY BRIGHTNESS —S1220

END

# FIG. 12B

START

S1200

S1201
DETERMINE FIRST PRIORITY OF PRIORITIES OF PIECES OF CONTENT BASED ON CONTENT TYPE

S1202
DETERMINE SECOND PRIORITY OF PRIORITIES OF PIECES OF CONTENT BASED ON OVERLAP RELATIONSHIP BETWEEN PIECES OF CONTENT

S1203
DETERMINE THIRD PRIORITY OF PRIORITIES OF PIECES OF CONTENT BASED ON USER FOCUS POSITION

S1210

S1211
DETERMINE AVERAGE DISPLAY BRIGHTNESS OF EACH OF PIECES OF CONTENT BASED ON FIRST TO THIRD PRIORITIES

S1212
ADJUST DISPLAY BRIGHTNESS BASED ON PIXEL INFORMATION OF PIXELS CONSTITUTING EACH OF PIECES OF CONTENT

S1220
DISPLAY CONTENT BASED ON REDUCED DISPLAY BRIGHTNESS

END

FIG. 13A

EP 3 196 867 A2

# FIG. 13B

DIMMING STYLE A
$\alpha=0.55; \beta=0.75$

# FIG. 13C

DIMMING STYLE B
$\alpha=0.85; \beta=0.75$